# EUROPEAN PATENT APPLICATION

(11) **EP 3 517 517 A1**
(43) Date of publication of application: **31.07.2019**
(21) Application number: 17853045.7
(22) Date of filing: 20.09.2017
(51) Int. Cl.: C04B 35/117, B23B 27/14, B23K 20/12

(54) **CERAMIC COMPOSITION, CUTTING TOOL, AND TOOL FOR FRICTION STIR WELDING USE**

(30) Priority: 21.09.2016 JP 2016183558
(71) Applicant: NGK Spark Plug Co., Ltd., Nagoya-shi, Aichi 467-8525 (JP)
(72) Inventor: KATSU Yusuke, Nagoya-shi Aichi 467-8525 (JP); KURAHASHI Toshiaki, Nagoya-shi Aichi 467-8525 (JP); YAMADA Hideto, Nagoya-shi Aichi 467-8525 (JP); MITSUOKA Takeshi, Nagoya-shi Aichi 467-8525 (JP)
(74) Representative: J A Kemp
(86) International application number: PCT/JP2017/033792
(87) International publication number: WO 2018/056275

(57) **Abstract**

An object of the present disclosure is to improve the properties of a ceramic composition. A ceramic composition contains alumina (Al₂O₃) and tungsten carbide (WC) and is characterized in that an atomic layer formed of at least one element selected from among transition metals belonging to Groups 4 to 6 of the periodic table, yttrium (Y), scandium (Sc), and lanthanoids is present at a crystal grain boundary between an alumina (Al₂O₃) crystal grain and a tungsten carbide (WC) crystal grain.

## Description

### TECHNICAL FIELD

The present disclosure relates to a ceramic composition.

### BACKGROUND ART

Various techniques are disclosed for improving the properties of ceramic compositions. Patent Documents 1 and 2 disclose formation of a composite material of alumina and a carbonitride for improving the strength, hardness, and thermal properties of alumina.

Patent Document 3 discloses a ceramic sintered body containing silicon carbide and aluminum oxide, in which a rare earth element is present at the grain boundary between silicon carbide and aluminum oxide.

Patent Documents 4 and 5 disclose an alumina-tungsten carbide ceramic composition. The composition has excellent hardness and thermal properties and is expected to be used in various industrial fields.

Patent Document 6 discloses an alumina-tungsten carbide ceramic composition containing alumina, tungsten carbide, and an additive compound, the composition being characterized in that at least one element contained in the additive compound (the element is selected from among transition metals belonging to Groups 4 to 6 of the periodic table (except for tungsten), yttrium, scandium, and lanthanoids) is present at either or both of a first crystal grain boundary and a second crystal grain boundary. The first crystal grain boundary is an interface between an alumina crystal grain and a tungsten carbide crystal grain, and the second crystal grain boundary is an interface between two alumina crystal grains.

### PRIOR ART DOCUMENT

### PATENT DOCUMENT

Patent Document 1: Japanese Patent Application Laid-Open *(kokai)* No. 2004-114163
Patent Document 2: Japanese Patent Application Laid-Open *(kokai)* No. H05-069205
Patent Document 3: Japanese Patent Application Laid-Open *(kokai)* No. 2006-206376
Patent Document 4: Japanese Patent Application Laid-Open *(kokai)* No. 2010-234508
Patent Document 5: Japanese Patent Application Laid-Open *(kokai)* No. H06-340481
Patent Document 6: Japanese Patent Application Laid-Open *(kokai)* No. 2016-113320

### SUMMARY OF THE INVENTION

### PROBLEM TO BE SOLVED BY THE INVENTION

As described above, various techniques have been proposed for improving the properties of ceramic compositions. An object of the present disclosure is to further improve the properties of a ceramic composition.

### MEANS FOR SOLVING THE PROBLEM

The present disclosure, which solves problems involved in the aforementioned techniques, can be implemented in the following modes.

A first mode of the present disclosure is a ceramic composition comprising alumina (Al₂O₃) and tungsten carbide (WC), the ceramic composition being characterized in that an atomic layer formed of at least one element selected from among transition metals belonging to Groups 4 to 6 of the periodic table, yttrium (Y), scandium (Sc), and lanthanoids is present at the crystal grain boundary between an alumina (Al₂O₃) crystal grain and a tungsten carbide (WC) crystal grain. According to this mode, since the atomic layer is present at the crystal grain boundary, the bonding force between crystal grains can increase. Thus, the entire ceramic composition exhibits improved mechanical properties and durability.

In the first mode, the atomic layer may be formed at the crystal grain boundary to follow the periodic arrangement of alumina (Al₂O₃) crystal grains or tungsten carbide (WC) crystal grains. When the atomic layer is formed as described above, the bonding force between crystal grains can further increase.

In the first mode, the atomic layer may be formed at the crystal grain boundary to follow the periodic arrangement of (100) plane of tungsten carbide (WC) crystal grains. According to this mode, since the atomic layer is formed as described above, the bonding force between crystal grains can further increase.

In the first mode, the atomic layer may be formed at the crystal grain boundary so as to have a thickness corresponding to one unit of (100) plane of tungsten carbide (WC) crystal grains. According to this mode, a reduction in thermal conductivity due to the atomic layer is prevented. Thus, the durability of the ceramic composition at high temperatures can be improved.

In the first mode, the atomic layer may contain zirconium (Zr) as said at least one element. According to this mode, the bending strength at 800°C increases.

In the first mode, the atomic layer may contain, as said at least one element, at least one element selected from among transition metals belonging to Groups 4 to 6 of the periodic table, but excluding zirconium (Zr), and to yttrium (Y), scandium (Sc), and lanthanoids. According to this mode, the bending strength at 800°C increases.

The present disclosure can be implemented in various modes other than the modes described above; for example, a cutting tool comprising the aforementioned ceramic composition, or a tool for friction stir welding comprising the ceramic composition.

### BRIEF DESCRIPTION OF THE DRAWINGS

[FIG. 1] View showing a cutting tool.
[FIG. 2] Perspective view showing the external appearance of a ceramic composition.
[FIG. 3] Cross-sectional image taken along line 3-3 of FIG. 2.
[FIG. 4] Schematic view showing crystal grains.
[FIG. 5] Image showing an observed crystal grain boundary.
[FIG. 6] Graph showing the concentration of zirconium measured around the crystal grain boundary.
[FIG. 7] HAADF-STEM image showing the vicinity of the crystal grain boundary.
[FIG. 8] ABF-STEM image showing the vicinity of the crystal grain boundary.
[FIG. 9] Flowchart illustrating a production method for a ceramic composition.
[FIG. 10] Table summarizing the results of measurement of strength and thermal conductivity.
[FIG. 11] Table summarizing the results of a cutting test by use of a cutting tool.
[FIG. 12] Perspective view showing the entire structure of a tool for friction stir welding.
[FIG. 13] View showing a wear test of the tool for friction stir welding.
[FIG. 14] View showing the wear test of the tool for friction stir welding.
[FIG. 15] View showing the wear test of the tool for friction stir welding.
[FIG. 16] Table summarizing the results of a second cutting test by use of a cutting tool.
[FIG. 17] Perspective view showing a cutting tool provided with a chip breaker.
[FIG. 18] Perspective view showing a second cutting tool provided with a chip breaker.

### MODES FOR CARRYING OUT THE INVENTION

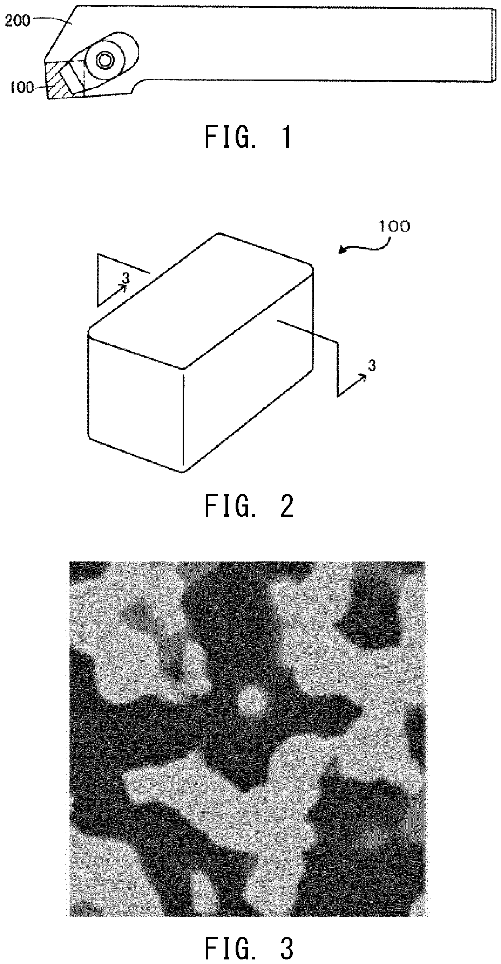

Embodiment 1 will now be described. FIG. 1 illustrates a cutting tool 200. The cutting tool 200 includes a ceramic composition 100 forming a cutting edge.

FIG. 2 is a perspective view showing the external appearance of the ceramic composition 100. The ceramic composition 100 contains alumina (Al₂O₃), tungsten carbide (WC), and an additive compound. The additive compound is a compound of at least one element selected from a specific element group. The specific element group includes transition metals belonging to Groups 4 to 6 of the periodic table and rare earth elements. In other words, the specific element group collectively refers to transition metals belonging to Groups 3 to 6 of the periodic table (except for actinoids). The rare earth elements collectively refer to scandium (Sc), yttrium (Y), and lanthanoids. The lanthanoids collectively refer to 15 elements (from lanthanum (La) to lutetium (Lu)).

FIG. 3 illustrates a cross-sectional image taken along line 3-3 of FIG. 2. Specifically, FIG. 3 illustrates a scanning electron microscope (SEM) image of a surface prepared through mirror polishing and subsequent thermal etching.

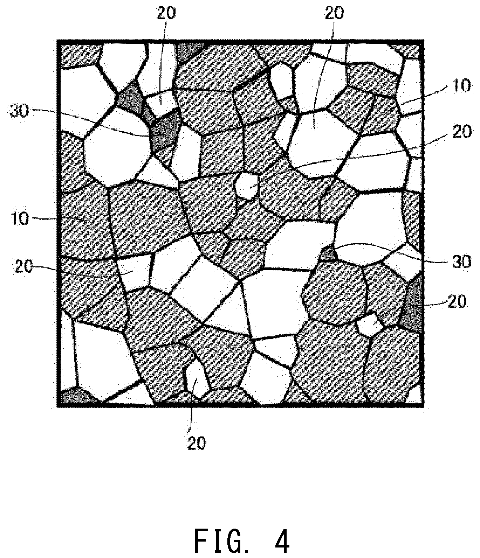

FIG. 4 is a schematic view of crystal grains shown in the image of FIG. 3. One side of each of the images of FIGS. 3 and 4 corresponds to the length (10 **µ**m) of an actually used base.

The ceramic composition 100 is a polycrystalline body containing a plurality of alumina crystal grains 10, a plurality of tungsten carbide crystal grains 20, and a plurality of additive compound crystal grains 30. The alumina crystal grains 10 are crystal grains composed of alumina. The tungsten carbide crystal grains 20 are crystal grains composed of tungsten carbide. The additive compound crystal grains 30 are crystal grains composed of the aforementioned additive compound. In the present embodiment, the additive compound is zirconia (ZrO₂).

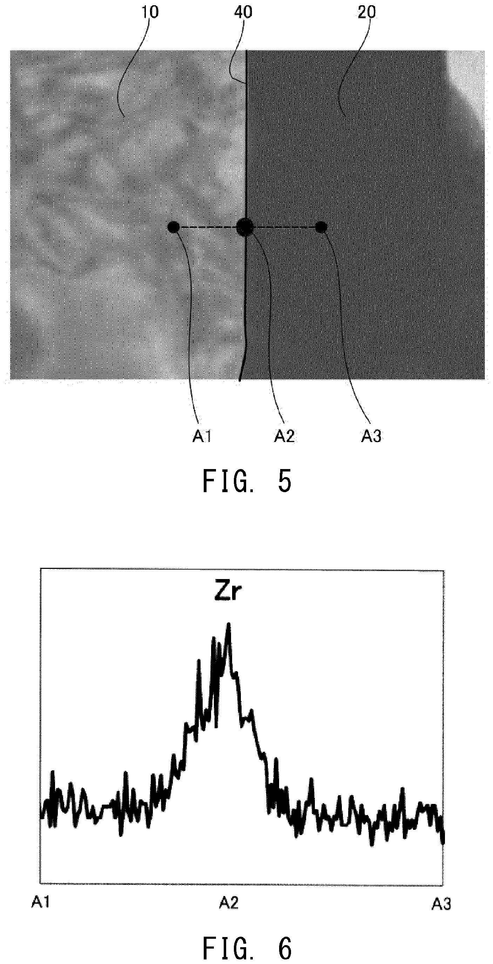

FIG. 5 is an image showing a crystal grain boundary 40 where an alumina crystal grain 10 is adjacent to a tungsten carbide crystal grain 20. For preparation of a sample for this observation, a thin section (100 nm × 100 nm) was cut out of a certain portion by means of a focused ion beam system (FIB system). A certain surface of the thin section was observed by means of a scanning transmission electron microscope (STEM).

FIG. 6 is a graph showing the concentration of zirconium around the crystal grain boundary 40 as measured by means of an energy dispersive X-ray spectrometer (EDS).

The horizontal axis of the graph of FIG. 6 corresponds to positions on a straight line across the crystal grain boundary 40 (from position A1 in the alumina crystal grain 10 through position A2 on the crystal grain boundary 40 to position A3 in the tungsten carbide crystal grain 20). The distance between position A1 and position A3 is about 50 nm. The vertical axis of the graph of FIG. 6 corresponds to the concentration of elemental zirconium. Thus, a higher level of the vertical axis of the graph indicates a higher concentration of elemental zirconium. The results shown in FIG. 6 demonstrate that zirconium (i.e., an additive element) is present at the crystal grain boundary 40 or in the vicinity thereof.

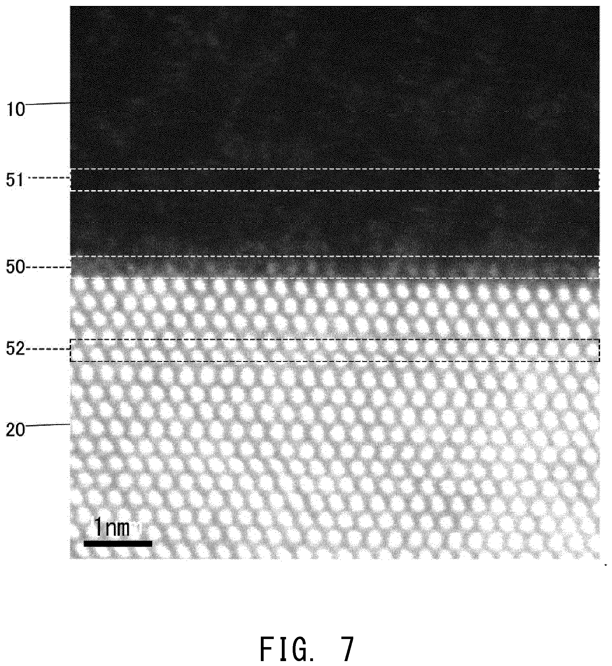

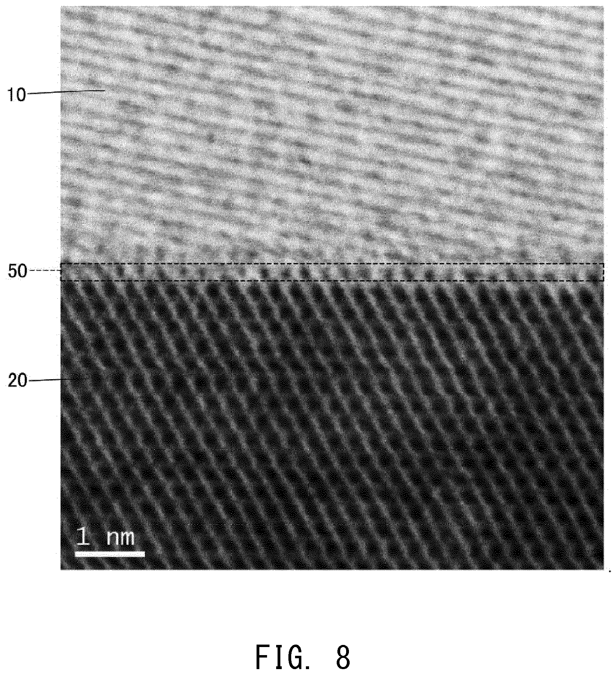

FIG. 7 or 8 is an image showing the vicinity of the crystal grain boundary 40. The magnification of the image illustrated in FIG. 7 or 8 is larger than that of the image illustrated in FIG. 3 or 5.

FIG. 7 is an HAADF-STEM image. "HAADF-STEM" refers to high-angle annular dark field scanning transmission electron microscopy. The detailed procedure of observation will be described below. A heavy element is shown bright in an HAADF-STEM image. As is clear from comparison with a structural model, white points with high brightness correspond to an atomic column of carbon (W).

FIG. 8 is an ABF-STEM image. "ABF-STEM" refers to annular bright-field scanning transmission electron microscopy. The detailed procedure of observation will be described below. A heavy element is shown dark in an ABF-STEM image. As is clear from comparison with a structural model, black points with low brightness correspond to an atomic column of carbon.

As illustrated in each of FIGS. 7 and 8, an intermediate layer is present at the crystal grain boundary 40. The intermediate layer is formed of an amorphous portion and an atomic array or only an atomic array. In the present embodiment, the intermediate layer is called "atomic layer 50." The presence of the atomic layer 50 at the crystal grain boundary 40 also refers to that the atomic layer 50 forms the crystal grain boundary 40.

The atomic layer 50 is formed to follow the periodic arrangement of tungsten carbide crystal grains 20. More specifically, the atomic layer 50 is formed to follow the periodic repetition of (100) plane of tungsten carbide crystal grains 20. Such a periodic arrangement probably increases the bonding force between an alumina crystal grain 10 and a tungsten carbide crystal grain 20.

The atomic layer 50 is formed to have a thickness (about 0.3 nm) corresponding to one unit of (100) plane of the tungsten carbide crystal grains. That is, the atomic layer 50 has a thickness corresponding to about one atom. Thus, the thickness of the atomic layer 50 may vary with the type of an element forming the atomic layer 50. Since the atomic layer 50 has a thickness corresponding to about one atom, the atomic layer 50 can be regarded as being shared with the boundary between the alumina crystal grain 10 and the tungsten carbide crystal grain 20.

The limited visual analysis with EDS was performed on the atomic layer 50 and regions 51 and 52 illustrated in FIG. 7. In the case of adjustment with W_Ma1 intensity, a zirconium (Zr) peak was most clearly shown in the analysis of the atomic layer 50. The results indicated that at least a portion of the atomic layer 50 was formed of zirconium atoms.

Zirconium is an element contained in zirconia serving as the additive compound. In the present embodiment, the element contained in the additive compound and forming the atomic layer 50 is called "additive element." The expression "an additive element forms the atomic layer 50" refers not only to the case where the atomic layer 50 contains only the additive element. Thus, the atomic layer 50 may contain an element forming the alumina crystal grain 10 or the tungsten carbide crystal grain 20 (e.g., carbon or tungsten).

The crystal grain boundary 40 was subjected to photographing and EDS analysis by means of a transmission electron microscope (TEM) apparatus equipped with an astigmatism corrector (Cs corrector) and an EDS in a scanning transmission electron microscope (STEM) mode.

For the aforementioned measurement, a sample for TEM analysis was prepared as follows. Firstly, a disk (diameter: 3 mm) was cut out of a sintered body, and the disk was subjected to mechanical polishing until a thickness of about 50 µm. Thereafter, a dimple (10 µm or less) was formed at the planar center of the disk by means of a dimple grinder. An Ar⁺ ion beam (acceleration voltage: 2 to 4 kV) was then applied at an incident angle of 4° to the front and back surfaces of the disk, to thereby prepare a sample for TEM analysis.

While the crystal orientation was determined with an electron beam diffraction image, the angle of the sample was adjusted, and a site where grain boundaries were not overlapped was searched, to thereby determine an observational analysis position. The TEM or Cs-STEM observational analysis was performed at an acceleration voltage of 200 kV.

After determination of the observational analysis position in the TEM mode, the Cs-STEM mode was adjusted to an optimal observation state, and clear focusing and color tone were appropriately adjusted by means of the apparatus function. In the EDS analysis, a region (length: 50 nm) including the grain boundary was determined, and the intensity of Zr-K beams was profiled.

The sample which was prepared in the TEM observation and the EDS analysis was observed under a TEM. A site where the alumina crystal grain 10 was adjacent to the tungsten carbide crystal grain 20 was searched, and the angle of the sample was adjusted so that the observation orientation of the tungsten carbide crystal grain 20 was (001) plane. In this case, the crystal grain boundary 40 between the alumina crystal grain 10 and the tungsten carbide crystal grain 20 was determined to have no overlapping portions (i.e., in an edge state), and a site satisfying all the conditions was determined as an observational analysis position.

The TEM or Cs-STEM observational analysis was performed at an acceleration voltage of 200 kV (acquisition time: five minutes). After determination of the observational analysis position in the TEM mode described above, the Cs-STEM mode was adjusted to an optimal observation state, and clear focusing and color tone were appropriately adjusted by means of the apparatus function.

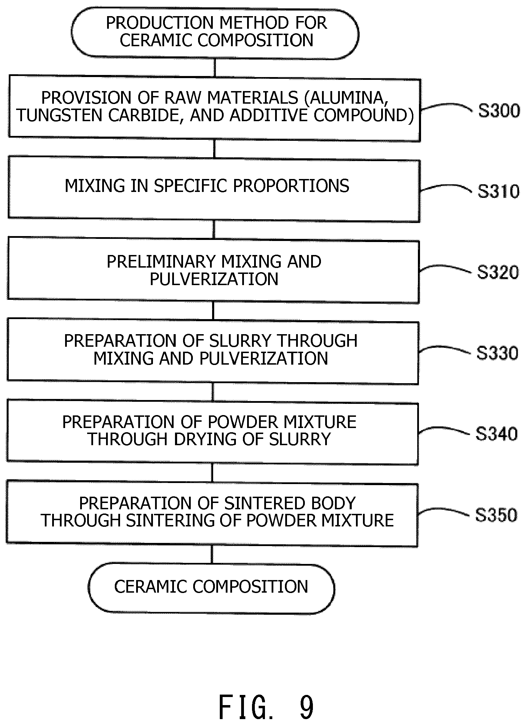

FIG. 9 is a flowchart illustrating a production method for the ceramic composition 100. Firstly, the raw materials for the ceramic composition 100 (i.e., alumina, tungsten carbide, and the additive compound) are provided (S300).

In S300, the aforementioned raw materials are provided in the form of powder. Specifically, there are provided alumina powder having a mean particle size of about 0.5 µm, tungsten carbide powder having a mean particle size of about 0.7 µm, and zirconia powder having a mean particle size of about 0.7 µm. These mean particle sizes are merely an example, and may be varied. The zirconia powder is preferably 3YSZ powder; i.e., zirconia powder partially stabilized with 3 mol% yttria (Y₂O₃) serving as a stabilizer. The mean particle size of each powder is measured by means of a laser diffraction particle size analyzer.

Subsequently, the above-provided raw materials are weighed and mixed in specific proportions (S310). Thereafter, preliminary mixing and pulverization are performed (S320). Specifically, while a solution containing alumina powder, tungsten carbide powder, and zirconium ions is mixed with a solvent, particles of these powders are pulverized by means of a ball mill.

The solution used in the present embodiment is, for example, 85% zirconium (IV) butoxide 1-butanol solution. The solvent used in the present embodiment is, for example, ethanol. In the present embodiment, the preliminary pulverization is performed for about 20 hours. In another embodiment, the preliminary pulverization period may be shorter or longer than 20 hours.

Subsequently, a slurry is prepared through mixing and pulverization (S330). Specifically, zirconia and a solvent are added to the mixture contained in the ball mill, followed by further mixing and pulverization. This process produces a slurry in which alumina powder, tungsten carbide powder, and zirconia powder are dispersed. In the present embodiment, the further mixing and pulverization after addition of zirconia are performed for about 20 hours. In another embodiment, the mixing and pulverization period may be shorter or longer than 20 hours.

Subsequently, the slurry is dried to prepare a powder mixture (S340). The process of preparing the powder mixture from the slurry may involve, for example, removal of the solvent from the slurry through drying of the slurry in a hot water bath, and sieving of the resultant powder.

Finally, a ceramic composition is prepared from the powder mixture by means of a hot press (S350). In the present embodiment, a carbon mold is filled with the powder mixture, and the powder mixture is heated under uniaxial pressing by means of a hot press. This process produces the ceramic composition 100, which is a sintered body of the powder mixture. In the present embodiment, the hot pressing is performed under the following conditions: sintering temperature: 1,750°C, sintering time: two hours, pressure: 30 MPa, and atmospheric gas: argon (Ar).

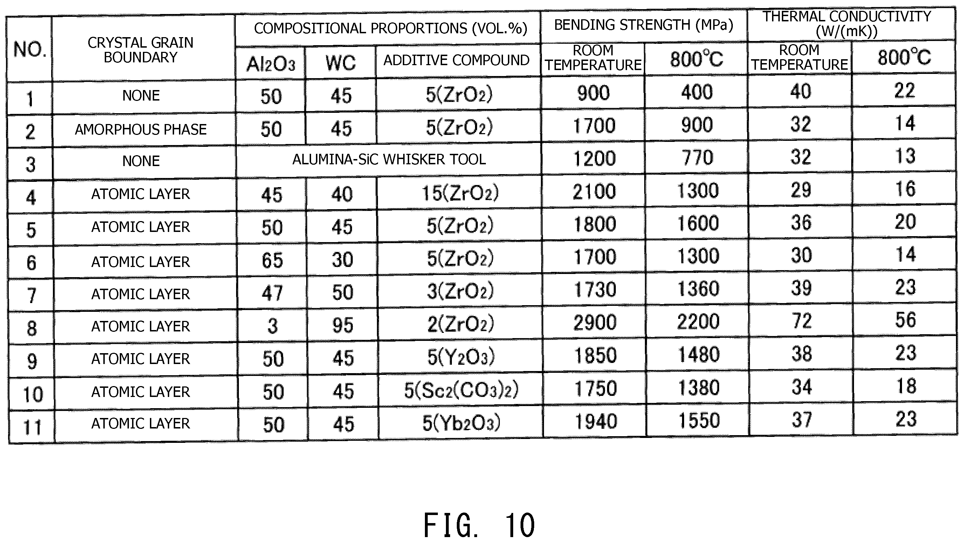

FIG. 10 is a table summarizing the results of measurement of the strengths and thermal conductivities of different ceramic compositions 100.

In order to specify an additive element at the crystal grain boundary 40 of each sample, a thin section was prepared by means of a focused ion beam system as described above, and the concentration of the additive element was measured at five points on the crystal grain boundary 40 by means of EDS.

In sample Nos. 1, 2, and 3, the atomic layer 50 was not present at the crystal grain boundary 40. However, in sample No. 2, an amorphous phase composed of silicon (Si) and calcium (Ca) was present at the crystal grain boundary 40. In sample Nos. 4 to 11, the atomic layer 50 was present at the crystal grain boundary 40. Since sample No.3 is known as an alumina-SiC whisker tool, the description of its compositional proportions is omitted.

In sample Nos. 4 to 8, the additive compound is zirconia, and the additive element is zirconium. In sample No.9, the additive compound is yttrium oxide (III) (Y₂O₃), and the additive element is yttrium. In sample No. 10, the additive compound is scandium carbonate (III) (Sc₂(CO₃)₃), and the additive element is scandium. In sample No. 11, the additive compound is ytterbium oxide (III) (Yb₂O₃), and the additive element is ytterbium (Yb). Thus, each of the additive elements of sample Nos. 4 to 11 belongs to the specific element group.

Now will be described the results of comparison between sample Nos. 1, 2, and 5, which have the same compositional proportions. Sample No.5 exhibits the highest bending strength at room temperature and 800°C. The results demonstrate that the presence of the zirconium atomic layer 50 causes an increase in bending strength.

The thermal conductivities at room temperature and 800°C of sample No.5 are lower than those of sample No. 1 but higher than those of sample No. 3. The results demonstrate that a decrease in thermal conductivity due to the presence of the atomic layer 50 is reduced as compared with the case of the amorphous phase.

Now will be described the results of comparison between sample Nos. 1, 2, 5, 9, 10, and 11, which have the alumina content of 50 vol.% and the tungsten carbide content of 45 vol.%. Hereinafter, sample No.1 or 2 may be referred to as "the sample having no atomic layer," and sample No.5, 9, 10, or 11 may be referred to as "the sample having atomic layer."

The minimum bending strengths at room temperature and 800°C of the sample having atomic layer are higher than the maximum bending strengths at room temperature and 800°C of the sample having no atomic layer. Conceivably, the atomic layer 50 greatly affects the bending strength as compared with the additive compound. Thus, the results demonstrate that an increase in bending strength is caused by the presence of the atomic layer 50 formed of any one element selected from the specific element group.

Sample No.5, in which the additive compound is zirconia, exhibits the maximum bending strength at 800°C. Thus, the additive element is preferably zirconium for increasing the bending strength at 800°C. Meanwhile, sample No. 11, in which the additive compound is ytterbium oxide, exhibits the maximum bending strength at room temperature. Thus, the additive element is preferably ytterbium for increasing the bending strength at room temperature.

The thermal conductivity at room temperature of the sample having atomic layer is lower than that of sample No. 1 but higher than that of sample No.3. The thermal conductivity at 800°C of the sample having atomic layer is higher than that of sample No.3. The thermal conductivity at 800°C of sample No. 9 or 11 is higher than that of sample No.1. In particular, sample No.9, in which the additive compound is yttrium oxide, exhibits the maximum thermal conductivity at room temperature and 800°C. Thus, the additive element is preferably yttrium for emphasizing the thermal conductivity.

It is not univocally determined whether the additive compound or the atomic layer 50 greatly affects the thermal conductivity. However, the presence of the atomic layer 50 was found to cause a considerable decrease in thermal conductivity. This is probably attributed to a small thickness of the atomic layer 50 as described above.

Comparison between sample No.5 and sample No. 6 indicates that an increase in tungsten carbide content leads to increases in bending strength and thermal conductivity at room temperature and 800°C (hereinafter referred to as "four values"). The four values of sample No.8 are considerably higher than those of any of the other samples probably because of high tungsten carbide content.

The bending strength was determined by use of a test piece having a total length of 40 mm, a width of 4 mm, and a thickness of 3 mm. The three-point bending strength of each sample was determined by the tester at an outer span of 30 mm according to Japanese Industrial Standards (JIS) R 1601.

The thermal conductivity was determined by use of a test piece having φ of 10 mm and a thickness of 2 mm. The thermal conductivities at room temperature and 800°C of each sample were determined by the tester according to Japanese Industrial Standards (JIS) R 1611.

Now will be described the compositional proportions (vol.%) shown in FIG. 10. The proportions of the components of the ceramic composition 100 can be adjusted to desired values (vol.%) by controlling the proportions of the raw materials mixed for preparation of the ceramic composition 100 to the aforementioned desired values (vol.%). The proportion (vol.%) of each raw material powder used for mixing can be determined on the basis of the mass of the raw material powder and the specific weight of the raw material. Since the raw materials barely react with one another during the production process, the proportions of the components of the ceramic composition 100 can be adjusted to desired values (vol.%) by controlling the proportions (vol.%) of the raw materials used for mixing.

The proportions (vol.%) of the components of the produced ceramic composition 100 can be determined as follows.

Procedure 1. A surface of the ceramic composition 100 is exposed, and the exposed surface is subjected to mirror polishing, followed by etching. The resultant surface is observed under an SEM and photographed at a magnification of 10,000 to prepare an image, and five regions (10 **µ**m × 10 **µ**m each) are appropriately selected from the image.

Procedure 2. Image analysis software is used to calculate the area "a" of alumina crystal grains 10, the area "b" of tungsten carbide crystal grains 20, and the area "c" of additive compound crystal grains 30 in each of the selected regions. The image analysis software was WinROOF available from Mitani Corporation.

Procedure 3. The following values: a/(a+b+c), b/(a+b+c), and c/(a+b+c) are determined on the basis of the calculated areas.

For determination of the proportions (vol.%) of the components of the ceramic composition 100, surfaces of the ceramic composition 100 are exposed at different angles, and the values corresponding to the exposed surfaces are calculated as described above and then averaged. This process can determine the alumina content (vol.%) of the ceramic composition 100 (i.e., a/(a+b+c)), the tungsten carbide content (vol.%) of the ceramic composition 100 (i.e., b/(a+b+c)), and the additive compound content (vol.%) of the ceramic composition 100 (i.e., c/(a+b+c)).

The ceramic composition 100 may contain an unavoidable impurity. The unavoidable impurity is a substance that is unavoidably incorporated during the production process. The unavoidable impurity may be, for example, at least one of iron (Fe), chromium (Cr), cobalt (Co), and nickel (Ni). The amount of the unavoidable impurity incorporated is adjusted to a level (e.g., 0.1 mass% or less) such that the impurity forms a solid solution with tungsten carbide and causes virtually no reduction in bending strength or thermal conductivity.

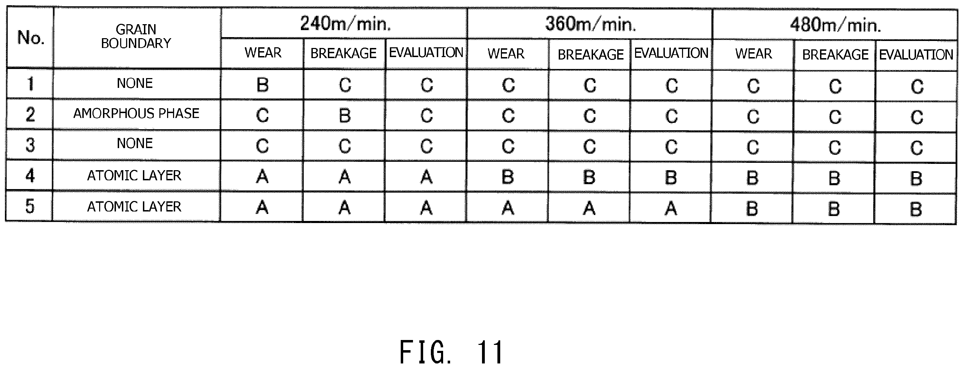

FIG. 11 is a table summarizing the results of a cutting test by use of a cutting tool 200. The cutting test was performed on different ceramic compositions 100. The compositional proportions of sample Nos. 1 to 5 shown in FIG. 11 are the same as those of sample Nos. 1 to 5 shown in FIG. 10.

The cutting tool has a shape specified by the designation "RCGX120700T01020" according to Japanese Industrial Standards (JIS) B 4120. Rene104 was used as a workpiece. The workpiece is in the shape of a disk (outer diameter: 250 mm) having a hole.

The conditions for the cutting test are as follows. The cutting test was performed at three different cutting speeds; i.e., 240 m/min, 360 m/min, and 480 m/min. The length per pass was adjusted to 200 mm. The depth of cutting was adjusted to 1.0 mm. The feed rate was adjusted to 0.2 mm/revolution. The cutting test involved the use of coolant.

Each sample was evaluated for wear as follows. Rating A (excellent) indicates that the amount of wear is less than 0.6 mm (the test can be continued); rating B (good) indicates that the amount of wear is 0.6 mm or more and less than 1.0 mm (the test can be continued); and rating C (poor) indicates that the amount of wear cannot be determined due to breakage of the cutting edge (the test cannot be continued).

Each sample was evaluated for breakage as follows. Rating A (excellent) indicates the absence of breakage and the absence of flaking (the test can be continued); rating B (good) indicates the absence of breakage and the presence of flaking (the test can be continued); and rating C (poor) indicates the presence of breakage (the test cannot be continued).

The "evaluation" shown in FIG. 11 corresponds to a comprehensive evaluation of wear and breakage on the basis of the following three criteria: rating A (excellent), rating B (good), and rating C (poor).

Sample No.1 exhibited rating C in all the evaluations, except for rating B in the evaluation of wear at a cutting speed of 240 m/min. Sample No.2 exhibited rating C in all the evaluations, except for rating B in the evaluation of breakage at a cutting speed of 240 m/min. Sample No. 3 exhibited rating C in all the evaluations.

In contrast, sample No.4 exhibited rating A in all the evaluations at a cutting speed of 240 m/min, and rating B in all the evaluations at a cutting speed of 360 m/min or 480 m/min. Sample No.5 exhibited rating A in all the evaluations at a cutting speed of 240 m/min or 360 m/min, and rating B in all the evaluations at a cutting speed of 480 m/min.

Thus, sample No. 4 or 5 including the atomic layer 50 was found to be superior to sample Nos. 1 to 3 as the ceramic composition 100 used for the cutting tool 200.

The cutting tool is preferably provided with a chip breaker. Since chips are readily broken by a chip breaker, damage to the cutting edge, which would otherwise occur upon contact of chips with the cutting edge, can be reduced. Furthermore, the cutting resistance is lowered by the chip breaker, and thus wear of the cutting edge is reduced.

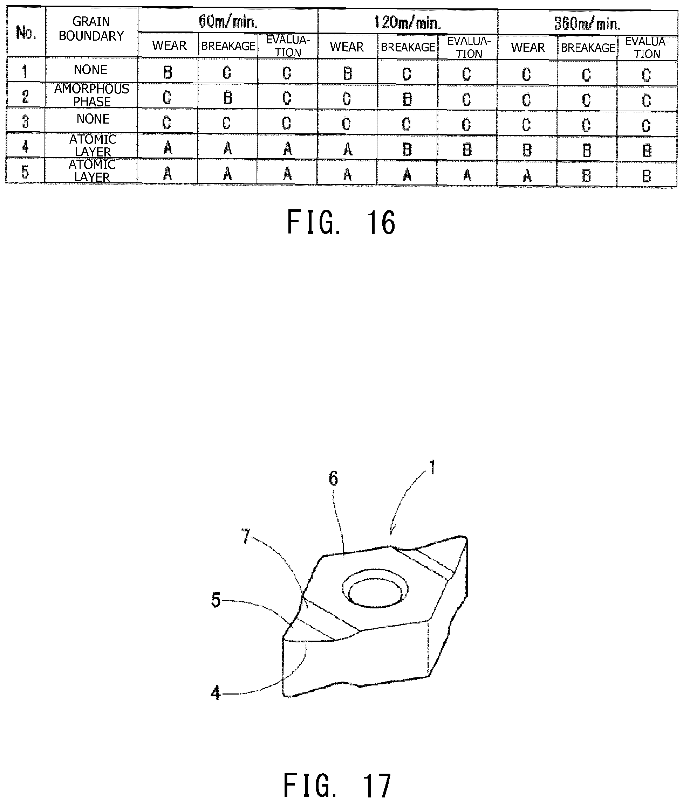

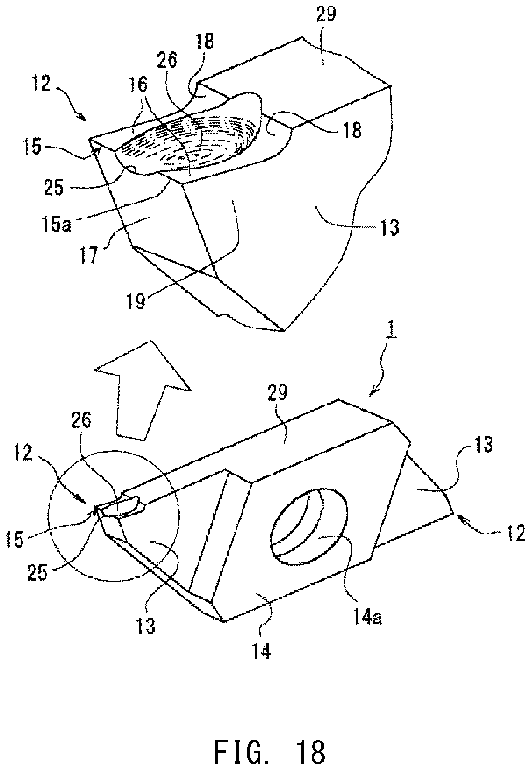

FIGs. 17 and 18 illustrate an example of a cutting tool provided with a chip breaker. The chip breaker is provided at a position where the cutting tool comes into contact with chips, and the position may vary depending on, for example, the type of a workpiece or the cutting conditions. The shape and position of the chip breaker are not limited to those shown in the drawing.

FIG. 16 is a table summarizing the results of a second cutting test by use of a cutting tool 200. The cutting test was performed on different ceramic compositions 100. The compositional proportions of sample Nos. 1 to 5 shown in FIG. 16 are the same as those of sample Nos. 1 to 5 shown in FIG. 10.

The cutting tool has a shape specified by the designation "CNGN120408FN" according to Japanese Industrial Standards (JIS) B 4120. Ti-6Al-4V was used as a titanium-based workpiece. The workpiece is in the shape of a cylinder having an outer diameter of 60 mm.

The conditions for the cutting test are as follows. The cutting test was performed at three different cutting speeds; i.e., 60 m/min, 120 m/min, and 360 m/min. The length per pass was adjusted to 100 mm. The depth of cutting was adjusted to 1.0 mm. The feed rate was adjusted to 0.2 mm/revolution. The cutting test involved the use of coolant.

Each sample was evaluated for wear as follows. Rating A (excellent) indicates that the amount of wear is less than 0.05 mm (the test can be continued); rating B (good) indicates that the amount of wear is 0.05 mm or more and less than 0.1 mm (the test can be continued); and rating C (poor) indicates that the amount of wear cannot be determined due to breakage of the cutting edge (the test cannot be continued).

Each sample was evaluated for breakage as follows. Rating A (excellent) indicates the absence of breakage and the absence of flaking (the test can be continued); rating B (good) indicates the absence of breakage and the presence of flaking (the test can be continued); and rating C (poor) indicates the presence of breakage (the test cannot be continued).

The "evaluation" shown in FIG. 16 corresponds to a comprehensive evaluation of wear and breakage on the basis of the following three criteria: rating A (excellent), rating B (good), and rating C (poor).

Sample No.1 exhibited rating C in all the evaluations, except for rating B in the evaluation of wear at a cutting speed of 60 or 120 m/min. Sample No.2 exhibited rating C in all the evaluations, except for rating B in the evaluation of breakage at a cutting speed of 60 or 120 m/min. Sample No. 3 exhibited rating C in all the evaluations.

In contrast, sample No.4 exhibited rating A in all the evaluations at a cutting speed of 60 m/min, and rating A in the evaluation of wear and rating B in the evaluation of breakage at a cutting speed of 120 m/min. Sample No. 4 exhibited rating B in all the evaluations at a cutting speed of 360 m/. Sample No.5 exhibited rating A in all the evaluations at a cutting speed of 60 m/min or 120 m/min, and rating A in the evaluation of wear and rating B in the evaluation of breakage at a cutting speed of 360 m/min.

Thus, sample No.4 or 5 including the atomic layer 50 was found to be superior to sample Nos. 1 to 3 as the ceramic composition 100 used for the cutting tool 200.

The cutting tool may be provided with a chip breaker. Since chips are readily broken by the chip breaker, damage to the cutting edge, which would otherwise occur upon contact of chips with the cutting edge, can be reduced. Furthermore, the cutting resistance is lowered by the chip breaker, and thus wear of the cutting edge is reduced.

FIGs. 17 and 18 illustrate an example of a cutting tool provided with a chip breaker. The chip breaker is provided at a position where the cutting tool comes into contact with chips, and the position may vary depending on, for example, the type of a workpiece or the cutting conditions. The shape and position of the chip breaker are not limited to those shown in the drawing.

Although not illustrated, the results of evaluations in the case of the use of S45C (i.e., an iron-based workpiece) were similar to those in the case of the use of Ti-6Al-4V (i.e., a titanium-based workpiece).

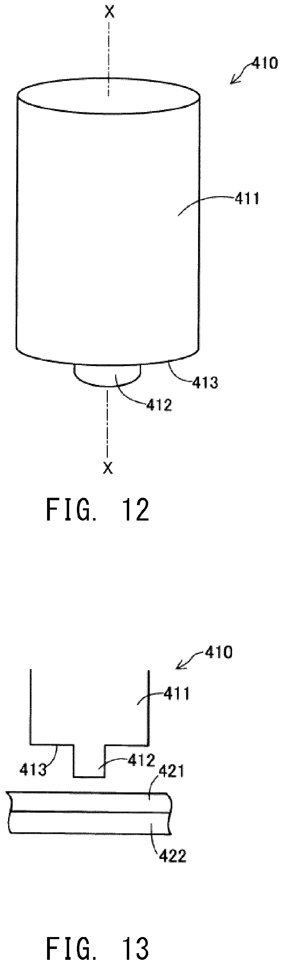

Embodiment 2 will now be described. FIG. 12 is a perspective view showing the entire structure of a tool 410 for friction stir welding (hereinafter will be referred to simply as the "tool 410").

The tool 410 includes a shaft 411 and a protrusion 412. The shaft 411 extends in a direction of an axial line X and has an approximately cylindrical shape. The protrusion 412 has an approximately cylindrical shape and projects in the direction of the axial line X from a surface perpendicular to the axial line X at one end of the shaft 411.

The protrusion 412 is formed at the center of the surface perpendicular to the axial line X at the aforementioned one end of the shaft 411. The axial line of the protrusion 412 coincides with the axial line X of the shaft 411.

During friction stir welding, the tool 410 is pressed onto a workpiece so that the protrusion 412 comes into contact with the workpiece. Thus, the aforementioned one end of the shaft 411 is located on the side toward the workpiece. The surface of the tool 410 perpendicular to the axial line X at the aforementioned one end of the shaft 411 may also be referred to as the "shoulder portion 413."

The entire tool 410 is formed of the ceramic composition 100 described above in Embodiment 1. The tool 410 is produced through processing of a sintered body prepared by the method described with reference to FIG. 9. The processing involves, for example, cutting, grinding, and polishing.

A welding test was performed for determining how the amount of wear of the tool 410 is affected by the type of the ceramic composition 100 forming the tool 410. As illustrated in FIG. 2, point welding was performed by pressing the tool onto stacked steel plates (i.e., workpieces).

The point welding will now be described. FIGS. 13 to 15 illustrate a point welding process by use of the tool 410. The tool 410 used for the process is attached to a non-illustrated welding apparatus.

Firstly, the protrusion 412 is positioned above stacked workpieces (workpieces 421 and 422) (see FIG. 13).

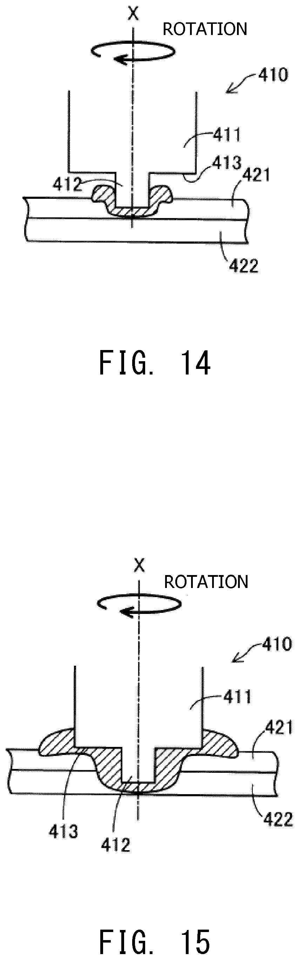

Subsequently, while the protrusion 412 is rotated about the axial line X, the protrusion 412 of the tool 410 is pressed from above into the workpieces 421 and 422 by the welding apparatus (see FIG. 14).

When the protrusion 412 is continuously rotated about the axial line X while the protrusion 412 is pressed into the workpieces 421 and 422, the resultant frictional heat causes plastic flow of a portion of the workpieces 421 and 422 in the vicinity of the protrusion 412.

The plastic flow portion of the workpieces 421 and 422 (hatched portion shown in FIGS. 14 and 15) is stirred with the protrusion 412, to thereby form a weld region (see FIG. 15) .

The workpieces 421 and 422 are bonded to each other in this weld portion. In this welding process, the protrusion 412 and at least the shoulder portion 413 come into contact with the aforementioned plastic flow portion.

Thereafter, the friction stir welding is completed through removal of the protrusion 412 from the workpieces 421 and 422.

One sample for each ceramic composition was subjected to the test. In the sample, the diameter of the shaft 411 was adjusted to 12 mm, the diameter of the protrusion 412 was adjusted to 4 mm, the length of the shaft 411 along the axial line X was adjusted to 18.5 mm, and the length of the protrusion 412 was adjusted to 1.5 mm.

The test conditions are as follows: workpiece: SUS304 (thickness: 2 mm), shield gas: argon (Ar), descending speed: 0.5 mm/s, tool pressing load: 1.2 × 10⁴ N, rotation speed: 600 rpm, retention time: 1 sec, and runs: 60.

As used herein, the term "shield gas" refers to a gas supplied in the test space for preventing contact between the workpiece and air during the test. The term "descending speed" refers to a speed at which the tool 410 approaches the workpieces 421 and 422. The term "tool pressing load" refers to a pressing load applied from the tool 410 to the workpieces 421 and 422. The term "rotation speed" refers to the rotation speed of the tool 410. The term "retention time" refers to a period during which a pressing load is applied from the tool 410 to the workpieces 421 and 422. The term "runs" refers to the number of repetitions of the test.

After completion of the test, the amount of wear of the tool 410 was determined. Specifically, the tool 410 was evaluated for wear by measuring the lengths of the protrusion 412 and the shoulder portion 413 along the axial line X before and after the test. The evaluation criteria are as follows: rating a (highest) > rating b > rating c > rating d.

Rating d: at least one of the following conditions is satisfied: (i) the amount of wear of the shoulder portion 413 is 0.5 mm or more, (ii) the amount of wear of the protrusion 412 is 0.5 mm or more, and (iii) the tool 410 undergoes damage (breakage such as cracking).

Rating c: a sample not corresponding to rating d, and at least one of the following conditions is satisfied: the amount of wear of the shoulder portion 413 is 0.3 mm or more and less than 0.5 mm, and the amount of wear of the protrusion 412 is 0.2 mm or more and less than 0.5 mm.

Rating b: a sample not corresponding to rating c, and at least one of the following conditions is satisfied: the amount of wear of the shoulder portion 413 is more than 0.2 mm and less than 0.3 mm, and the amount of wear of the protrusion 412 is more than 0.05 mm and less than 0.2 mm.

Rating a: the amount of wear of the shoulder portion 413 is 0.2 mm or less, and the amount of wear of the protrusion 412 is 0.05 mm or less.

The evaluation results are as follows. The tool 410 produced from sample No.1 or 2 described in Embodiment 1 exhibited rating d. In the case of sample No.6, rating b was given. In the case of sample No. 7 or 8, rating a was given. The tool 410 produced from common cemented carbide exhibited rating d. Thus, the results in Embodiment 2 also demonstrated superiority in the presence of the atomic layer 50.

The present disclosure is not limited to the embodiments, examples, and modifications described in the present specification , but may be implemented in various other forms without departing from the scope of the disclosure. For example, in order to solve, partially or entirely, the above-described problems or to achieve, partially or entirely, the above-described effects, technical features of the embodiments, examples, and modifications corresponding to technical features of the modes described in the section "SUMMARY OF THE INVENTION" may be replaced or combined as appropriate. The technical features may be eliminated as appropriate unless the technical features are specified as indispensable ones in the present specification. For example, other embodiments will be described below.

The atomic layer 50 is formed from at least one element selected from the specific element group; i.e., the atomic layer 50 may be formed from two or more elements selected from the specific element group. All the elements belonging to the specific element group are transition metals. Any element selected from the specific element group probably exhibits effects similar to those obtained by the element specifically described above, since the selected element is less likely to form a liquid phase during sintering and to cause segregation. For example, in the case where two or more elements are selected from the specific element group, one of these elements may be tungsten.

The atomic layer 50 may be formed to follow the periodic arrangement of alumina crystal grains 10 at the crystal grain boundary 40. In such a case, the bonding force between crystal grains probably increases, as in the case where the atomic layer 50 is formed to follow the arrangement of tungsten carbide crystal grains 20.

### DESCRIPTION OF REFERENCE NUMERALS

10: alumina crystal grain; 20: tungsten carbide crystal grain; 30: additive compound crystal grain; 40: crystal grain boundary; 50: atomic layer; 51: region; 52: region; 100: ceramic composition; 200: cutting tool; 410: tool for friction stir welding; 411: shaft; 412: protrusion; 413: shoulder portion; 421: workpiece; and 422: workpiece

## Claims

1. A ceramic composition comprising alumina (Al₂O₃) and tungsten carbide (WC), the ceramic composition being **characterized in that**:
an atomic layer formed of at least one element selected from among transition metals belonging to Groups 4 to 6 of the periodic table, yttrium (Y), scandium (Sc), and lanthanoids is present at the crystal grain boundary between an alumina (Al₂O₃) crystal grain and a tungsten carbide (WC) crystal grain.

2. A ceramic composition according to claim 1, wherein the atomic layer is formed at the crystal grain boundary to follow the periodic arrangement of alumina (Al₂O₃) crystal grains or tungsten carbide (WC) crystal grains.

3. A ceramic composition according to claim 1 or 2, wherein the atomic layer is formed at the crystal grain boundary to follow the periodic arrangement of (100) plane of tungsten carbide (WC) crystal grains.

4. A ceramic composition according to any one of claims 1 to 3, wherein the atomic layer is formed at the crystal grain boundary so as to have a thickness corresponding to one unit of (100) plane of tungsten carbide (WC) crystal grains.

5. A ceramic composition according to any one of claims 1 to 4, wherein the atomic layer contains zirconium (Zr) as said at least one element.

6. A ceramic composition according to any one of claims 1 to 4, wherein the atomic layer contains, as said at least one element, at least one element selected from among transition metals belonging to Groups 4 to 6 of the periodic table, but excluding zirconium (Zr), and to yttrium (Y), scandium (Sc), and lanthanoids.

7. A cutting tool comprising a ceramic composition as recited in any one of claims 1 to 6.

8. A cutting tool comprising a ceramic composition as recited in claim 7, the cutting tool being a cutting tool for an iron-based or titanium-based workpiece.

9. A cutting tool comprising a ceramic composition as recited in claim 7, the cutting tool 200 being **characterized by** having a chip breaker formed thereon.

10. A cutting tool according to claim 7, wherein the cutting tool has a chip breaker formed thereon and is a cutting tool for an iron-based or titanium-based workpiece.

11. A tool for friction stir welding, the tool comprising a ceramic composition as recited in any one of claims 1 to 6.

## Amended claims

### Amended claims under Art. 19.1 PCT

1. A ceramic composition 100 comprising alumina (Al₂O₃) and tungsten carbide (WC), the ceramic composition 100 being **characterized in that**:
an atomic layer 50 formed of at least one element selected from among transition metals belonging to Groups 4 to 6 of the periodic table, yttrium (Y), scandium (Sc), and lanthanoids is present at the crystal grain boundary 40 between an alumina (Al₂O₃) crystal grain 10 and a tungsten carbide (WC) crystal grain 20.

2. A ceramic composition 100 according to claim 1, wherein the atomic layer 50 is formed at the crystal grain boundary 40 to follow the periodic arrangement of alumina (Al₂O₃) crystal grains 10 or tungsten carbide (WC) crystal grains 20.

3. A ceramic composition 100 according to claim 1 or 2, wherein the atomic layer 50 is formed at the crystal grain boundary 40 to follow the periodic arrangement of (100) plane of tungsten carbide (WC) crystal grains 20.

4. A ceramic composition 100 according to any one of claims 1 to 3, wherein the atomic layer 50 is formed at the crystal grain boundary 40 so as to have a thickness corresponding to one unit of (100) plane of tungsten carbide (WC) crystal grains 20.

5. A ceramic composition 100 according to any one of claims 1 to 4, wherein the atomic layer 50 contains zirconium (Zr) as said at least one element.

6. A ceramic composition 100 according to any one of claims 1 to 4, wherein the atomic layer 50 contains, as said at least one element, at least one element selected from among transition metals belonging to Groups 4 to 6 of the periodic table, but excluding zirconium (Zr), and to yttrium (Y), scandium (Sc), and lanthanoids.

7. A cutting tool 200 comprising a ceramic composition 100 as recited in any one of claims 1 to 6.

8. A cutting tool 200 comprising a ceramic composition 100 as recited in claim 7, the cutting tool 200 being a cutting tool for processing an iron-based or titanium-based workpiece.

9. A cutting tool 200 comprising a ceramic composition 100 as recited in claim 7, the cutting tool 200 being **characterized by** having a chip breaker formed thereon.

10. A cutting tool 200 according to claim 7, wherein the cutting tool 200 has a chip breaker formed thereon and is a cutting tool for processing an iron-based or titanium-based workpiece.

11. A tool 410 for friction stir welding, the tool 410 comprising a ceramic composition 100 as recited in any one of claims 1 to 6.
